# EUROPÄISCHE PATENTSCHRIFT

(11) **EP 3 419 840 B1**
(45) Veröffentlichungstag und Bekanntmachung des Hinweises auf die Patenterteilung: **19.05.2021**
(21) Anmeldenummer: 17700983.4
(22) Anmeldetag: 20.01.2017
(51) Int. Cl.: B60G 7/00, B62D 21/11, B62D 7/18, B60G 13/00, C22C 47/08, C22C 47/06, B22F 7/08, B33Y 10/00, B33Y 80/00, C22C 47/20

(54) **VERWENDUNG EINES BAUELEMENTS IN FAHRWERKEN VON KRAFTFAHRZEUGEN UND VERFAHREN ZUR HERSTELLUNG VON FAHRWERKEN VON KRAFTFAHRZEUGEN**
USE OF AN ELEMENT IN CHASSIS OF VEHICLES AND METHOD FOR PRODUCING CHASSIS OF VEHICLES
UTILISATION D'UN ELEMENT DANS DES CHASSIS DE VÉHICULES ET PROCÉDÉ DE FABRICATION DE CHASSIS DE VÉHICULES

(30) Priorität: 23.02.2016 DE 102016202755
(43) Veröffentlichungstag der Anmeldung: 02.01.2019
(73) Patentinhaber: Bayerische Motoren Werke Aktiengesellschaft, 80809 München (DE)
(72) Erfinder: TENHAEFF, Katja, 81373 München (DE)
(86) Internationale Anmeldenummer: PCT/EP2017/051206
(87) Internationale Veröffentlichungsnummer: WO 2017/144204

(56) Entgegenhaltungen:
- WO-A1-2005/053884
- WO-A1-2016/083007
- DE-A1- 10 017 205
- DE-A1-102011 051 115
- DE-A1-102013 021 378
- DE-A1-102014 005 010
- DE-U1-202014 101 418
- GB-A- 2 509 245
- US-A1- 2006 254 744
- BRIAN GORDON: "Selective Reinforcement Using Metal Matrix Composite Prepreg and Ultrasonic Additive Manufacturing", AEROMAT 2015, THE LATEST WORD ON AEROSPACE MATERIALS; LONG BEACH CONVENTION CENTER, LONG BEACH, CA, USA; MAY, 11-14,2015, ASM INTERNATIONAL, US , 13. Mai 2015 (2015-05-13), Seite 1, XP008184465, Gefunden im Internet: URL:https://asm.confex.com/asm/aero15/webp rogram/Paper39614.html [gefunden am 2017-05-09]

## Beschreibung

Vorliegende Erfindung betrifft eine Verwendung zumindest eines Bauelements in Fahrwerken von Kraftfahrzeugen, welches Bauelement aus einem metallischen Werkstoff besteht und Kräfte aufnimmt oder weiterleitet und ein Verfahren zur Herstellung von entsprechenden Fahrzeug-Fahrwerken. Als Stand der Technik seien die EP 1 724 132 B1, die DE 100 17 205 B4, die DE 10 2014 005 010 A1, und weiterhin die DE 101 15 477 A1 und die DE 10 2011 051 115 A1 genannt.

In Kraftfahrzeugen nach dem Stand der Technik werden Fahrwerkskomponenten hauptsächlich aus metallischen Werkstoffen gefertigt. Dabei kommen vor allem ur- und umformende Verfahren zum Einsatz. Dabei werden die Komponenten zum Teil für jeden Fahrzeug-Typ eigens konstruiert und angepasst. Daneben werden aber auch sog. Baukästen verwendet, wobei gleiche Bauelemente für unterschiedliche Fahrzeug-Typen zum Einsatz kommen. Ist somit ein gewisser Baukasten vorgegeben, so können mehrere Fahrzeug-Derivate oder Typen, deren FahrwerksKomponenten im Wesentlichen gleiche geometrische Abmessungen besitzen, mit einem einzigen gleichen Bauelement abgedeckt werden. Da sich die verschiedenen Fahrzeug-Typen oder Derivate üblicherweise hinsichtlich ihrer Antriebsleistung und/oder ihres Gewichts unterscheiden, ist es erforderlich, diese gleichen Bauteile hinsichtlich ihrer Verwendung in demjenigen Fahrzeug-Typ auszulegen, welcher zur höchsten Belastung des Bauelements führt. Üblicherweise ist dies ein Derivat mit höherer Antriebsleistung und/oder höherem Gewicht. Als Folge dessen ist die jeweilige Komponente bzw. das besagte gleiche Bauelement für ein anderes Fahrzeug-Derivat (mit geringerer Antriebsleistung und/oder geringerem Gewicht) überdimensioniert. Letzteres ist beispielsweise aus GewichtsGründen unerwünscht.

Bei einer gesonderten Fertigung von Komponenten des Fahrwerks, im Gegensatz zur Verwendung von Baukastensystemen, entstehen hohe Kosten für die Konstruktion, Planung, Anschaffung der Produktionsmittel und die anschließende Logistik. Beim Einsatz von Baukästen hingegen kommt es oftmals zu der beschriebenen Überdimensionierung, was zu einem wünschenswerterweise zu vermeidenden Materialverbrauch und zu einer Gewichtserhöhung führt. Ferner ist zu beachten, dass bei der Fertigung von Metall-Bauteilen Änderungen in späten Entwicklungsphasen oder kurz vor einem Serienproduktionsablauf nur sehr schwer und unter hohen Kosten vorgenommen werden können. Vor allem bei tendenziell für große Stückzahlen kostengünstigen umformenden Fertigungsverfahren lassen sich nur mit hohem Aufwand gezielt Verstärkungen von Lastwegen im Bauteil einbringen.

Beispiele für Verstärkungen im Fahrwerksbereich von Fahrzeugen zeigen die eingangs drei erstgenannten Schriften. So beschreibt die EP 1 724 132B1 einen Querträger einer Verbundlenkerachse, auf welchem partiell ein verstärkendes Metallgewebe aufgeklebt ist. Zum Heften kann dieses durch Punktschweißen fixiert werden. Beim Stand der Technik nach der DE 100 17 205 B4 sind in den Knieabschnitt eines aus Aluminium bestehenden radführenden Sichellenkers durch Ultraschallschweißen verstärkende Carbonfasern eingebracht. Weiters beschreibt die DE 10 2014 005 010 A1 einen Achsträger mit eingeschmiedeten Verstärkungselementen aus faserverstärktem Kunststoff. Schließlich sei noch die DE 101 15 477 A1 als Stand der Technik genannt, der ein aus einer Metallmatrix mit darin verteilten Verstärkungsfasern hergestelltes Lenkrad-Bauelement eines Fahrzeugs beschreibt. Der DE 10 2011 051 115 A1 ist der Hinweis zu entnehmen, dass solche Metall-Matrix-Verbundwerkstoffe unverhältnismäßig hohe Fertigungskosten verursachen.

Es ist Aufgabe vorliegender Erfindung, ein Fahrwerk für ein Fahrzeug oder verschiedene Fahrzeug-Typen (im Sinne eines Baukastensystems) anzugeben, das bei kostengünstiger Herstellung und Montage dauerfest betrieben werden kann. Insbesondere soll dabei der Konflikt aus kostengünstiger Herstellung, Leichtbau und Steifigkeit gelöst werden. Des Weiteren ist es Aufgabe vorliegender Erfindung, ein entsprechendes Verfahren zur Herstellung des Fahrwerks anzugeben. Die Lösung der Aufgabe erfolgt durch die Merkmale der unabhängigen Ansprüche. Die abhängigen Ansprüche haben vorteilhafte Ausgestaltungen der Erfindung zum Gegenstand.

Somit wird die Erfindung gelöst durch die Verwendung eines Bauelements in Fahrwerken von Kraftfahrzeugen sowie durch ein Fahrwerk eines Kraftfahrzeugs, in welchem das Bauelement (oder ein Profilbauteil) aus Metall verwendet wird, welches Bauelement Kräfte aufnimmt oder weiterleitet und welches abschnittsweise durch zumindest ein auf die Bauelement-Oberfläche aufgebrachtes bandförmiges Verstärkungselement, welches aus einer faserverstärkten Metallmatrix besteht, verstärkt ist. Beispielsweise umfasst das Fahrwerk einen Achsträger. Der Achsträger wiederum umfasst einen Längsträger. Der Längsträger kann aus einem oder mehreren Profilbauteilen aus Metall bestehen bzw. zusammengesetzt sein. Diese einzelnen Profilbauteile bzw. sog. Bauelemente können beispielsweise bei einem Längsträger rohr- oder schalenförmige Metallteile sein, die zum Längsträger zusammen verschweißt oder geschraubt sind. Im Rahmen der Erfindung ist vorgesehen, dass auf zumindest einem entsprechenden Bauelement oder Profilbauteil des Fahrwerks ein bandförmiges und dabei flächiges und aus einer faserverstärkten Metallmatrix gebildetes Verstärkungselement aufgebracht ist, und zwar durch im weitesten Sinne thermisches Fügen, welches Fügen üblicherweise mit einem gewissen Anpressdruck erfolgt. Durch dieses thermische Fügen wird eine innige Verbindung zwischen dem lokal zu verstärkenden (Kräfte aufnehmenden oder weiterleitenden) Bauelement und dem lokal darauf aufgebrachten bandförmigen Verstärkungselement geschaffen.

Was die Bandförmigkeit des Verstärkungselements betrifft, so wird dadurch zum Ausdruck gebracht, dass es sich dabei um einen länglichen und flächigen Streifen (von geringer Höhe, einer gewissen Länge und üblicherweise einer demgegenüber geringeren Breite) handelt, der vorliegend zur Verstärkung aufgebracht ist; ein anderer beispielhafter Anwendungszweck eines Bandes wäre laut Duden das Zusammenhalten. Dabei kann ein erfindungsgemäß vorgesehenes Verstärkungselement im wesentlichen nur Verstärkungsfasern enthalten, welche in einen die Metall-matrix bildenden Metallwerkstoff eingebettet sind. Ein solches Einbetten kann bspw. durch Schmelzimprägnieren der Verstärkungsfasern, welche bspw. miteinander verwebt sein können, dargestellt werden. Dabei ist auch ein sog. Infiltrieren mit geschmolzenem Metall möglich, vgl. bspw. die DE 10 2013 225 939 A1. Alternativ kann ein erfindungsgemäß vorgesehenes Verstärkungselement aber auch durch ein Hybridgarn-Halbzeug gebildet sein, welches neben den Verstärkungsfasern die Metallmatrix bildende Fasern aus einem Metallwerkstoff aufweist. Hier besteht das bandförmige Verstärkungselement als solches vor dem erfindungsgemäßen Aufbringen praktisch nur aus Fasern, die geeignet miteinander verbunden sind, wobei metallische Fasern vorhanden sind, die durch das Aufbringen auf das Fahrwerks-Bauelement bzw. durch das (im weitesten Sinne) thermische Fügen mit diesem die besagte Metallmatrix bilden, in welcher dann die anderen Verstärkungsfasern eingebettet sind. Miteinander verbunden sein können die genannten Fasern vor dem Aufbringen des Verstärkungselements beispielsweise durch Weben, Stricken oder Flechten, wobei im letztgenannten Fall ein daraus entstehendes schlauchförmiges Gebilde noch aufzuschneiden ist, um ein gewünschtes gespreiztes, nämlich im wesentlichen flächiges Halbzeug zu erhalten.

Zurückkommend auf erfindungsgemäß lokal verstärkte Fahrwerks-Bauelemente können aber auch andere (als die vorstehend beispielhaft genannten) metallische Bauelemente im Fahrwerk eines Kraftfahrzeugs entsprechend gestaltet, d.h. auf ihrer Oberfläche lokal mit zumindest einem faserverstärkten metallischen Verstärkungselement versehen sein, welches insbesondere im Bereich eines oder längs eines sog. Lastpfades durch thermisches Fügen (im weitesten Sinne) aufgebracht ist. Der Begriff des Lastpfades ist dem Ingenieur bekannt. Erfindungsgemäß mittels eines Verstärkungselements verstärkte metallische (und Kräfte aufnehmende bzw. weiterleitende) Bauelemente können einen offenen oder geschlossenen Querschnitt aufweisen. Außen am geschlossenen Querschnitt oder auch innen bei den offenen Querschnitten können erfindungsgemäße bandförmige, flächige Verstärkungselemente aufgesetzt sein. Durch solche Verstärkungselemente können insbesondere die Festigkeit und Steifigkeit, aber auch das akustische Verhalten und das Schwingungsverhalten des jeweiligen Bauelements bzw. Profilbauteils in gewünschter Weise angepasst werden.

Das Aufbringen solcher Verstärkungselemente ist im Herstellungsprozess des Fahrwerks relativ kostengünstig. Die kostenintensiven Werkzeuge, insbesondere für die umgeformten Metallteile eines Fahrwerks eines gesamten Baukastens können dabei unverändert bleiben. Damit ist es insbesondere einfach möglich, ein besagtes Bauelement, welches vorgesehen ist, mit gleichen geometrischen Abmessungen an hinsichtlich ihres Gewichts und/oder ihrer Antriebsleistung unterschiedlichen Kraftfahrzeug-Typen verbaut zu werden, bei Verwendung in einem Kraftfahrzeug-Typ mit höherem Gewicht und/oder höherer Antriebsleistung auf zumindest einem einen Lastpfad bildenden Oberflächen-Abschnitt erdfindungsgemäß mit einem Verstärkungselement zu versehen, welches Verstärkungselement bei einem anderen Kraftfahrzeug-Typ mit geringerem Gewicht und/oder geringerer Antriebsleistung am besagten Bauelement entweder überhaupt nicht oder in geringerer Dimensionierung (hinsichtlich Höhe bzw. Dicke oder Breite oder Länge) und/oder Faseranteil vorgesehen ist.

Bereits erwähnt wurde, dass es sich bei dem besagten und durch ein Verstärkungselement lokal oder bedarfsweise verstärkten Bauelement um einen Achsträger handeln kann. An dieser Stelle sei ausdrücklich darauf hingewiesen, dass eine nur bei einigen Fahrzeug-Typen oder Derivaten vorgesehene Verstärkung eines sog. "Baukasten"-Bauelements nur ein möglicher Anwendungsfall ist. Grundsätzlich kann es auch vorgesehen sein, ein bestimmtes metallisches Fahrwerks-Bauelement auf erfindungsgemäße Weise für die Verwendung in jedem Fahrzeug-Typ, in welchem dieses Bauelement verbaut ist, auf einem Oberflächenabschnitt lokal mit einem Verstärkungselement aus einem faserverstärkten Metallwerkstoff zu versehen. Insbesondere liegt dieses Verstärkungselement dann längs eines durch dieses Bauelement verlaufenden Lastpfades.

Ein erfindungsgemäß vorgesehenes Verstärkungselement wird einerseits als bandförmig und weiterhin als flächig bezeichnet. Das letztgenannte Adjektiv bzw. Merkmal drückt aus, dass die senkrecht zu derjenigen Oberfläche des genannten Bauelementes, auf welche das Verstärkungselement aufgebracht ist, gemessene Höhe oder Dicke des Verstärkungselements signifikant geringer als dessen Ausdehnung in Länge und Breite, d.h. praktisch in oder parallel zu der genannten Oberfläche gemessen ist. Die genannte Bandfömigkeit hingegen erlaubt es, das Verstärkungselement praktisch ähnlich einem Klebeband oder dgl. auf die besagte Oberfläche aufzutragen. Insbesondere kann hierfür ein geeignetes vorzugsweise robotergesteuertes Applikationsgerät geführt werden. In diesem Zusammenhang kann auch vorgesehen sein, das Verstärkungselement vor dem genannten thermischen Fügen (im weitesten Sinne) geringfügig haftend, d.h. unter Vermittlung einer Klebeschicht, auf das jeweilige Bauteil aufzutragen.

Was das thermische Fügen eines auf einem Profilbauteil bzw. Bauelement im Fahrwerksbereich eines Fahrzeugs aufgebrachten und aus einer faserverstärkten Metallmatrix bestehenden Verstärkungselements betrifft, so erfolgt dies unter einem gewissen Anpressdruck, um die gewünschte verstärkende Wirkung sicherzustellen. Wenngleich nahezu beliebige thermische Fügeverfahren zur Anwendung kommen können, so ist als besonders bevorzugtes Verfahren das sogenannte "Ultrasonic Additiv Manufacturing" vorgeschlagen, wobei Ultraschall-Vibrationen in Verbindung mit einem Laser zur partiellen Erhitzung der einander zugewandten Metalloberflächen des zu verstärkenden Bauteils sowie des Verstärkungselements genutzt werden. Aufgrund der Ultraschallvibrationen wird nur relativ geringer Energieeintrag durch den Laser benötigt und es gewährleisten die Ultraschallvibrationen insbesondere des Verstärkungselements gleichzeitig eine bestmögliche stoffschlüssige Verbindung zwischen dem genannten Bauelement und dem Verstärkungselement.

Zum ""Ultrasonic Additiv Manufacturing" kann bspw. auf den Beitrag "Ultrasonic additive manufacturing: A hybrid production process for novel functional products" von R. J. Friel, und R.A. Harris auf der 17.CIRP

Conference on Electro Physical and Chemical Machining (ISEM) verwiesen werden.

Im übrigen kann zusätzlich zur stoffschlüssigen Verbindung ein Formschluss zwischen dem Verstärkungselement und dem besagten metallischen Bauelement vorgesehen sein. Ein solcher Formschluss kann beispielsweise durch Vorsehen von Strukturierungen (= Erhebungen oder Vertiefungen) oder durch Pins oder Stifte oder ähnliches im jeweiligen zu verstärkenden Bauelement gebildet sein.

Gebildet wird ein erfindungsgemäß verwendetes Verstärkungselement insbesondere durch ein faserverstärktes Band ("Tape"). Dieses ist durch eine Metallmatrix gebildet, in der Verstärkungsfasern vorgesehen sind. Vorzugsweise sind diese Fasern, welche bevorzugt aus Kohlenstoff bestehen oder durch einen Keramikwerkstoff gebildet sind, unidirektional ausgerichtet. Daneben können die Verstärkungsfasern aber auch aus Glas oder einem Metallwerkstoff bestehen, der sich hinsichtlich ausgewiesener bzw. für die jeweilige Belastung relevanter Materialkennwerte von der Metallmatrix des Verstärkungselements unterscheidet. Solche faserverstärkten Bänder können dann auf den besagten metallischen Bauelementen an den entsprechenden Stellen, d.h. insbesondere längs eines Lastpfades (von durch das jeweilige Bauelement zu übertragenden oder aufzunehmenden Kräften) geeignet aufgebracht werden. Beim metallischen Werkstoff des erfindungsgemäß verstärkten Bauelements kann es sich dabei bspw. um eine Aluminiumlegierung oder um Stahl handeln.

Es können neben einem Achsträger auch irgendwelche radanbindende Bauteile in erfindungsgemäßer Weise verstärkt sein. Wie bekannt sind die Räder des Fahrzeugs über hier sog. radanbindende Bauteile letztlich mit der Karosserie des Fahrzeugs verbunden, derart, dass diese auf den Rädern abgestützt ist. Solche radanbindende Bauteile können neben einem Radträger ein Schwenklager oder Achsschenkel sein, aber auch radführende Lenker wie Längslenker, Querlenker, Zugstrebe oder ein Schwingungsdämpfer, wobei insbesondere ein metallisches Dämpferrohr desselben auf erfindungsgemäße Weise verstärkt sein kann. Auch die vorstehend genannten radanbindenden Bauteile stellen hier Fahrwerks-Bauelemente oder Profilbauteile aus Metall dar, die mit Verstärkungselementen versteift oder verstärkt sind. Ein weiteres Beispiel ist ein dem Fachmann bekanntes und üblicherweise sowohl mit einem Achsträger als auch mit der Karosserie des Fahrzeugs lösbar verbundenes sog. Schubfeld, welches einer Versteifung im Fahrwerksbereich eines Kraftfahrzeugs dient und welches ein besagtes metallisches Bauelement mit durch thermisches Fügen bzw. Aufschweißen aufgebrachtem Verstärkungselement ist oder aufweist.

Das durch zumindest ein Band bzw. eine Mehrzahl von übereinander aufgebrachten Bändern, welches/welche seinerseits/ihrerseits eine Vielzahl von insbesondere unidirektionalen Verstärkungsfasern enthält bzw. enthalten, gebildete Verstärkungselement kann auch durch Umwickeln des zu verstärkenden Bauelements gebildet sein. Ein solches Wickeln eines Bandes kann kreuzweise, d.h. sich überkreuzend erfolgen, derart, dass sich die Verstärkungsfasern des mehrfach übereinander liegenden unidirektionalen Bandes mehrfach kreuzen. Bezogen auf eine Längserstreckung des metallischen Bauelements können die Verstärkungsfasern mit dieser abwechselnd, nämlich übereinander liegend gewickelt, beispielsweise einen Winkel in der Größenordnung von 15° und 165° einschließen. Beispielsweise kann die (übereinander liegende) Schichtungsreihenfolge derart gestaltet sein, dass zunächst alle Verstärkungsfasern in einer ersten Richtung (bspw. unter 15°) und danach dann alle Verstärkungsfasern in einer zweiten Richtung (bspw. unter 165°) gewickelt sind; alternativ ist auch eine abwechselnd geänderte Faserorientierung (bspw. 25°, 155°, 15°, 165°, usw.) zur Bildung eines Geflechts möglich. Selbstverständlich sind auch stückweise zusammengesetzte oder nur partielle Umwicklungen möglich und es liegt eine bevorzugte Dicke des durch gewickelte Verstärkungsfasern mit Metallmatrix gebildeten Verstärkungselements in der Größenordnung von 0,5 Millimeter bis 5 mm.

Die Verstärkungselemente können zur Verstärkung spezifischer Lastpfade, wie auch zur großflächigen Verstärkung einer Oberfläche mit einer geeigneten Orientierung der Faserrichtung eingesetzt werden. Durch das Aufbringen der Verstärkungselemente lassen sich neben der Steifigkeit auch die akustischen Eigenschaften durch die Änderung der lokaldynamischen Steifigkeit des besagten Bauelements (mit Verstärkungselement) gezielt einstellen. Hierdurch lassen sich Fahrwerkskomponenten einfach skalieren, d.h. an unterschiedliche Fahrzeug-Typen anpassen. So kann ein Bauteil durch individuelle Verstärkung mittels der Verstärkungselemente an ein bestimmtes Fahrzeugmodell oder eine Motorisierungsvariante oder Ländervariante angepasst oder auch bei einer allfälligen Änderung befähigt werden. So können beispielsweise in einem Baukastensystem Komponenten vereinheitlicht und anschließend als Synergieteile durch den Einsatz der Verstärkungselemente an das jeweilige Fahrzeugmodell angepasst werden. Die Verstärkungselemente ermöglichen es, Auslegungsfahrzeuge für eine Baukastenkomponente geringer dimensioniert anzusetzen und fehlende Funktionen wie beispielsweise Steifigkeiten für andere Derivate hoch zu skalieren. Über die Anpassbarkeit ist es möglich, mehrere Derivate mit einer einzigen metallischen Basiskomponente (als besagtem Bauelement) abzudecken.

Durch die Reduzierung der nötigen Produktionsvarianten werden die Kosten für Werkzeug und Maschinen sowie der logistische Aufwand reduziert. Durch den Einsatz der Verstärkungselemente lassen sich die Komponenten des Fahrwerks besser an die jeweiligen Ansprüche anpassen. So ist es möglich, durch gezielte Ausnutzung der Anisotropie der Fasern aufgrund der hohen mechanischen Eigenschaften in Faserrichtung Lastpfade gezielt zu unterstützen. Damit kann das Bauteilgewicht weiter optimiert und Materialüberschuss vermieden werden. Ferner erlaubt der Einsatz der aufgebrachten Bänder ein unkompliziertes Anpassen der Fahrwerkskomponenten an irgendeine Veränderung. So können Fertigungsabläufe einfach an vorgegebene Veränderungen oder an andere Komponenten angepasst werden, ohne hohe Kosten für eine Umrüstung der Werkzeuganpassung zu erzeugen.

Weitere Einzelheiten, Merkmale und Vorteile der Erfindung ergeben sich aus der nachfolgenden Beschreibung und den Figuren. Es zeigen:
- Figur 1: ein Ausführungsbeispiel einer erfindungsgemäßen Verwendung eines Bauelements in einem Hinterachsträger eines Fahrwerks
- Figur 2: einen weiteres Ausführungsbeispiel der erfindungsgemäßen Verwendung eines Bauelements in einem Hinterachsträger in Ansicht von oben und von unten,
- Figur 3: einen erfindungsgemäß verstärkten Vorderachsträger eines Fahrwerks
- Figur 4: einen erfindungsgemäß verstärkten Dreiecks-Querlenker eines Fahrwerks
- Figur 5: einen erfindungsgemäß verstärkten 2-Punkt-Lenker eines Fahrwerks
- Figur 6: ein erfindungsgemäß verstärktes Schwenklager eines Fahrwerks in zwei Ansichten,
- Figur 7: einen erfindungsgemäß verstärkten Schwingungsdämpfer,
- Figur 8: ein erfindungsgemäß verstärktes (und vorstehend bereits genanntes) Schubfeld, bspw. zur Versteifung eines Achsträgers.

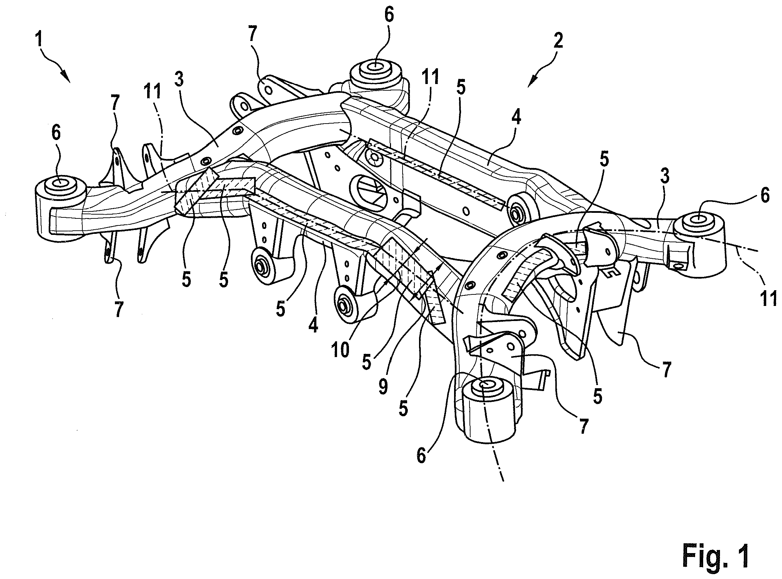

Im Folgenden werden anhand der Figuren 1 bis 8 verschiedene Komponenten eines Fahrwerks 1 eines Kraftfahrzeugs beschrieben, welche jeweils metallische Bauelemente aufweisen oder sind, welche in erfindungsgemäßer Weise durch ein aus einer Metallmatrix mit eingebetteten Kohlenstoff- oder Keramikfasern bestehendes und durch thermisches Fügen auf die metallische Bauelement-Oberfläche aufgebrachtes Verstärkungselement 5 mechanisch verstärkt sind.

Figur 1 zeigt einen Achsträger 2, genauer Hinterachsträger, des Fahrwerks 1. Gemäß Figur 1 umfasst der Achsträger 2 zwei Längsträger 3 und zwei Querträger 4, die die beiden Längsträger 3 miteinander verbinden. An dem Achsträger 2 gibt es zumindest vier Karosserieanbindungspunkte 6. Über diese Karosserieanbindungspunkte 6 wird der Achsträger 2 mit einer nicht dargestellten Karosserie des Kraftfahrzeuges verbunden.

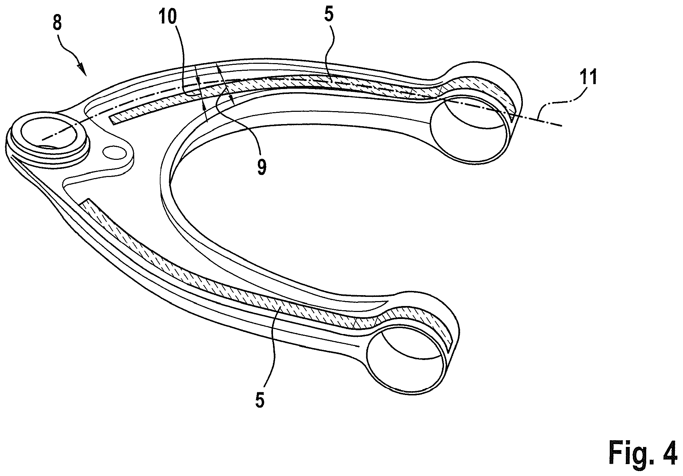

Seitlich an den Längsträgern 3 sind Radanbindungspunkte 7 ausgebildet. An diesen Radanbindungspunkten 7 werden radanbindende Bauteile, wie beispielsweise ein Querlenker 8 aus Fig.4, befestigt. Diese radanbindenden Bauteile verbinden das nicht gezeigte und wie üblich auf einem Radträger drehbar gelagerte Fahrzeug-Rad quasi mit dem Achsträger 2 bzw. der Fzg.-Karosserie.

Der Achsträger 2 ist aus Metall, beispielsweise Aluminium oder Stahl gefertigt. Für lokale Versteifungen sowie ggf. zur Anpassung weiterer Eigenschaften sind im gezeigten Ausführungsbeispiel auf den Querträgern 4 und den Längsträgern 3 mehrere erfindungsgemäße Verstärkungselemente 5 aufgebracht. Diese Verstärkungselemente 5 sind jeweils durch metallische Bänder (ebenfalls Bezugsziffer 5) mit integrierten unidirektionalen Verstärkungs-Fasern gebildet. Durch Einwirkung von vorzugsweise mittels eines Lasers eingebrachter Wärme sowie Ultraschall-Vibrationen und geringem Druck wurde die Metall-Matrix der Bänder (5) mit dem Material des Achsträgers 2 verschmolzen, wobei gleichzeitig auch eine ausreichend feste Verbindung mit dem jeweiligen metallischen Bauelement, nämlich dem Längsträger 3 bzw. dem Querträger 4 entstand.

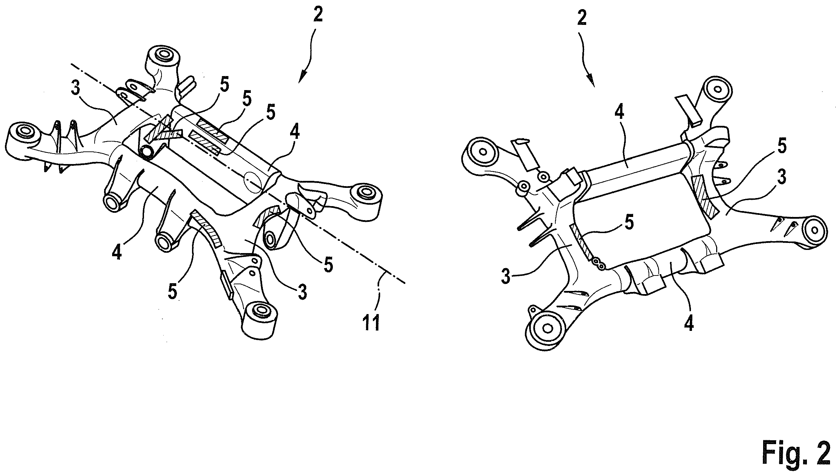

Figur 2 zeigt in zwei Ansichten ebenfalls einen Achsträger 2 (Hinterachsträger) mit kurzen Verstärkungselementen 5 zur lokalen Versteifung am Längsträger 3 und/oder Querträger 4. An einem Hinterachsträger können die Verstärkungselemente 5 auch der Verbesserung der akustischen Eigenschaften, insbesondere bezüglich der Übertragung der Anregung eines am Hinterachsträger befestigten Hinterachsgetriebes des Kraftfahrzeugs dienen.

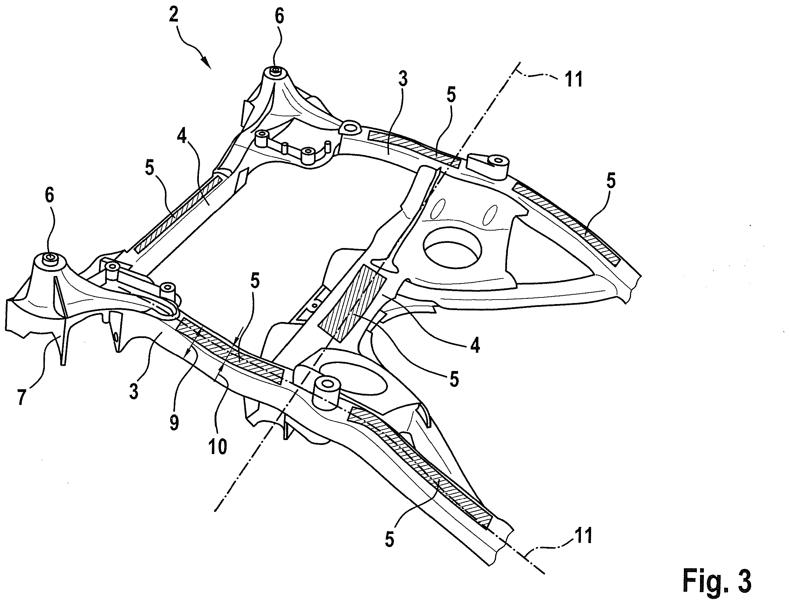

Figur 3 zeigt eine Ausbildung des Achsträgers 2 als Vorderachsträger. Wie beim Hinterachsträger können auch beim Vorderachsträger die Längsträger 3 und die Querträger 4 mit erfindungsgemäßen Verstärkungselementen 5 lokal versteift sein. An einem Vorderachsträger dienen die Verstärkungselemente 5 insbesondere der Skalierung der mechanischen Eigenschaften wie Steifigkeit oder Festigkeit, des akustischen Übertragungsverhaltens oder des Crashverhaltens des Kraftfahrzeugs.

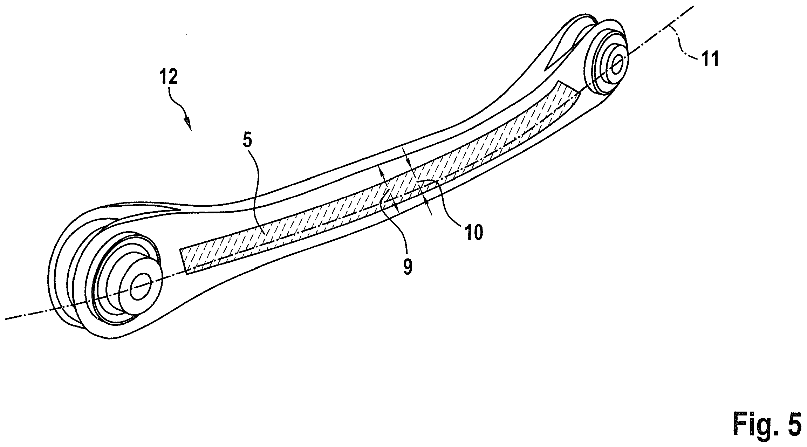

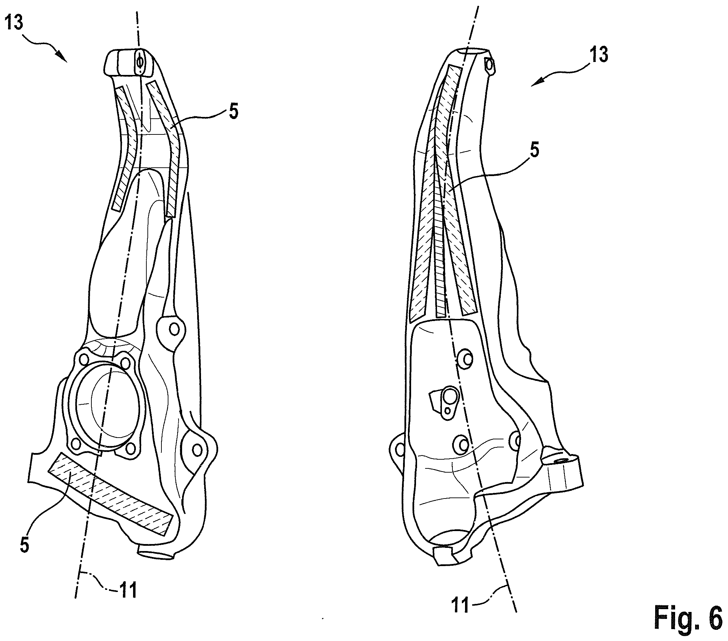

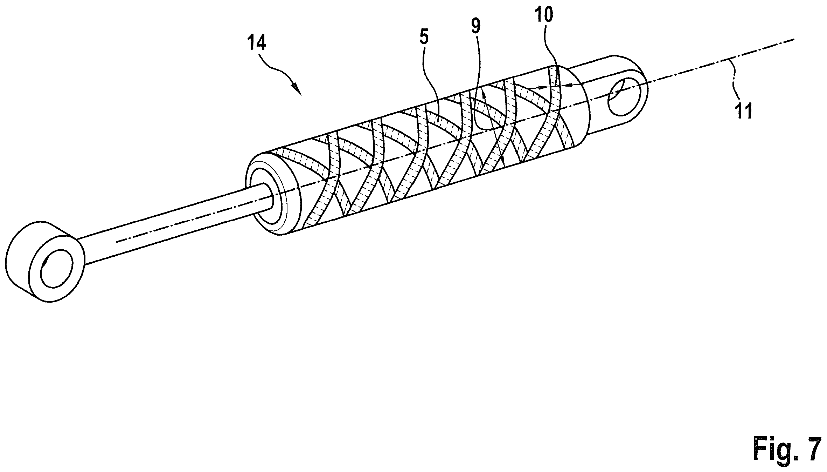

Die Figuren 4 bis 7 zeigen Beispiele von radanbindenden Bauteilen, so einen Dreiecks-Querlenker 8 (Fig.4), einen 2-Punkt-Lenker 12 (Fig.5), der bspw. als Längslenker zum Einsatz kommen kann, ein Schwenklager 13 (Fig.6) in zwei Ansichten und einen Schwingungsdämpfer 14 (Fig.7). Diese Bauteile bzw. Bauelemente 8, 12, 13, 14 bestehen aus einem metallischen Werkstoff und sind mit erfindungsgemäßen Verstärkungselementen 5 mit einer faserverstärkten Metall-Matrix verstärkt. Beim Schwingungsdämpfer 14 ist dessen Dämpferrohr mit Verstärkungselementen 5 außenseitig umwickelt.

An den Lenkern 8, 12 und dem Schwenklager 13 dienen die Verstärkungselemente 5 insbesondere der Skalierung der mechanischen Eigenschaften, z.B. Steifigkeit, Festigkeit und Versagenslast. Am Dämpfer 14 dienen die Verstärkungselemente 5 insbesondere der Erhöhung des Berstdrucks, welcher z.B. für Hindernisüberfahrten des Fahrzeugs ausschlaggebend ist.

Die vorstehend genannten verstärkten Profilbauteile 3, 4, 8, 12, 13, 14 des Fahrwerks 1 weisen jeweils eine Längsrichtung 11 auf. Die Verstärkungselemente 5 und somit auch deren unidirektionalen Fasern sind entweder parallel oder geneigt zur Längsrichtung 11 angeordnet. So findet sich am Dämpferrohr des Schwingungsdämpfers 14 sowie oder am Achsträger 2 am Übergang zwischen Längsträger 3 und Querträger 4 eine geneigte Anordnung, wobei die Neigung in der Größenordnung von +/- (0° bis 45°), vorzugsweise 25° bis 65°, bzgl. der Umfangsrichtung des (jeweiligen) Rohres liegt. In den Figuren sind an teilweise ein Bauelement-Durchmesser 9 oder eine Bandbreite 10 des Verstärkungselements 5 eingezeichnet. Bevorzugt liegt die Bandbreite 10 bei höchstens 50% des Bauteildurchmessers 9.

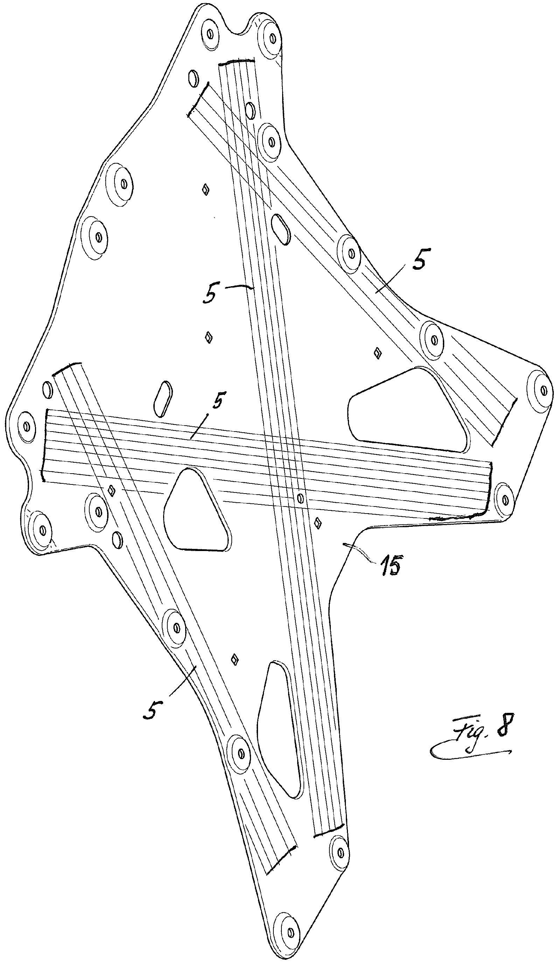

Figur 8 zeigt ein dem Fachmann grundsätzlich bekanntes Schubfeld 15, insbesondere zur Versteifung eines Achsträgers an diesem und/oder an der Bodenstruktur des Fahrzeug-Aufbaus befestigt, als erfindungsgemäß verstärktes Fahrwerks-Bauelement in perspektivischer Darstellung. Auf dieses flächige metallische Schubfeld 15 sind lokal bandförmige Verstärkungselemente 5 aufgebracht, die durch in eine Metallmatrix eingebettete Verstärkungsfasern gebildet sind. Zwei solche Verstärkungselemente 5 sind in den beiden Randbereichen des Schubfelds 15 im Einbauzustand im wesentlichen in Fahrzeug-Längsrichtung verlaufend vorgesehen und zwei weitere bandförmige Verstärkungselemente 5 verlaufen zumindest annährend als Diagonalen des annährend rechteckigen Schubfelds 15. Die Ausrichtung der Verstärkungsfasern ist dabei wie durch die mehreren parallelen Gerade im jeweiligen Verstärkungselement 5 dargestellt jeweils in Längsrichtung der bandförmigen Verstärkungselemente 5. Deren Erstreckungsrichtungen sind die Hauptbelastungsrichtungen eines (üblichen) Schubfelds unter anderem im Falle eines Fahrzeug-Crashs. Besonders vorteilhaft ist bei diesem Ausführungsbeispiel, dass sich einzelne Verstärkungselemente partiell überdecken, indem sie sich überkreuzen.

## Patentansprüche

1. Verwendung zumindest eines aus einem metallischen Werkstoff bestehenden und Kräfte aufnehmenden oder weiterleitenden Bauelements in Fahrwerken von Kraftfahrzeugen, auf dessen Oberfläche des Bauelements zumindest ein bandförmiges und aus einer faserverstärkten Metallmatrix bestehendes Verstärkungselement (5) durch im weitesten Sinne thermisches Fügen aufgebracht ist, welche Kraftfahrzeuge hinsichtlich ihres Gewichts und/oder ihrer Antriebsleistung unterschiedlich sind und ein hinsichtlich dessen geometrischen Abmessungen gleiches besagtes Kräfte aufnehmendes oder weiterleitendes Bauelement umfassen, wobei in einem Kraftfahrzeug-Typ mit höherem Gewicht und/oder höherer Antriebsleistung auf zumindest einem einen Lastpfad bildenden Oberflächen-Abschnitt dieses Bauelements ein Verstärkungselement (5) aufgebracht ist, welches Verstärkungselement (5) bei einem anderen Kraftfahrzeug-Typ mit geringerem Gewicht und/oder geringerer Antriebsleistung entweder überhaupt nicht oder in geringerer Dimensionierung vorgesehen ist.

2. Verwendung eines zumindest eines Bauelements gemäß Anspruch 1, wobei die Fahrwerke jeweils einen Achsträger mit zumindest zwei Längsträgern (3) und zumindest einem die beiden Längsträger verbindenden Querträger (4) umfassen, wobei der Längsträger (3) und/oder der Querträger (4) oder ein Schubfeld (15) ein besagtes metallisches Bauelement mit durch thermisches Fügen aufgebrachtem Verstärkungselement (5) ist oder aufweist.

3. Verwendung nach Anspruch 2, wobei die Fahrwerke jeweils zumindest ein radanbindendes Bauteil zur gelenkigen Anbindung eines Rades des Fahrzeuges an den Achsträger (2) und/oder an eine Karosserie des Fahrzeuges umfassen, wobei das radanbindende Bauteil ein besagtes metallisches Bauelement mit durch thermisches Fügen aufgebrachtem Verstärkungselement (5) ist oder aufweist.

4. Verwendung nach einem der vorhergehenden Ansprüche, wobei das Verstärkungselement (5) auch formschlüssig mit dem besagten und Kräfte aufnehmenden oder weiterleitenden Bauelement verbunden ist.

5. Verwendung nach einem der vorhergehenden Ansprüche, wobei die Verstärkungsfasern des Verstärkungselements (5) Kohlenstoff-Fasern oder Keramikfasern sind oder aus Glas oder einem sich von der Metallmatrix des Verstärkungselements unterscheidenden Metallwerkstoff bestehen.

6. Verwendung nach einem der vorangegangenen Ansprüche, wobei das Verstärkungselement neben einem die Metallmatrix bildenden Metallwerkstoff im wesentlichen nur die in der Metallmatrix eingebetteten Verstärkungsfasern enthält

7. Verwendung nach einem der Ansprüche 2 - 5, wobei das Verstärkungselement durch ein Hybridgarn-Halbzeug gebildet ist, welches neben den Verstärkungsfasern die Metallmatrix bildende Fasern aus einem Metallwerkstoff aufweist.

8. Verfahren zur Herstellung von Fahrwerken (1) von Kraftfahrzeugen, wobei die Kraftfahrzeuge hinsichtlich ihres Gewichts und/oder ihrer Antriebsleistung unterschiedlich sind und wobei die Fahrwerke jeweils ein aus einem metallischen Werkstoff bestehendes und hinsichtlich dessen geometrischen Abmessungen gleiches Kräfte aufnehmende oder weiterleitende Bauelement umfassen, wobei ein bandförmiges und aus einer faserverstärkten Metallmatrix bestehendes Verstärkungselement (5) durch im weitesten Sinne thermisches Fügen unter Anpressdruck auf das Bauelement eines Fahrwerks (1) aufgebracht wird und welches Verstärkungselement (5) bei einem anderen Kraftfahrzeug-Typ mit geringerem Gewicht und/oder geringerer Antriebsleistung entweder überhaupt nicht oder in geringerer Dimensionierung aufgebracht wird.

9. Verfahren nach Anspruch 8, wobei das Verstärkungselement durch sogenanntes Ultrasonic-Additive-Manufacturing aufgebracht wird.

## Claims

1. Use of at least one part that consists of a metal material and absorbs or transmits forces in chassis of motor vehicles, at least one tape-like reinforcing element (5) that consists of a fibre-reinforced metal matrix being applied to the surface of the part by thermal joining in the broadest sense, which motor vehicles are different in terms of their weight and/or drive power and comprise a said part that absorbs or transmits forces which is identical in terms of its geometric dimensions, wherein, in a motor vehicle type with a higher weight and/or greater drive power, a reinforcing element (5) is applied to at least one surface portion, forming a load path, of this part, which reinforcing element (5) is either not provided at all or is provided in a smaller size in a different motor-vehicle type with a lower weight and/or lower drive power.

2. Use of at least one part according to Claim 1, wherein the chassis each comprise an axle carrier having at least two longitudinal members (3) and at least one cross member (4) connecting the two longitudinal members, wherein the longitudinal member (3) and/or the cross member (4) or a shear panel (15) is or has a said metal part having a reinforcing element (5) applied by thermal joining.

3. Use according to Claim 2, wherein the chassis each comprise at least one wheel attachment component for the articulated connection of a wheel of the vehicle to the axle carrier (2) and/or to a body of the vehicle, wherein the wheel attachment component is or has a said metal part having a reinforcing element (5) applied by thermal joining.

4. Use according to one of the preceding claims, wherein the reinforcing element (5) is also connected in a form-fitting manner to said part that absorbs or transmits forces.

5. Use according to one of the preceding claims, wherein the reinforcement fibres of the reinforcing element (5) are carbon fibres or ceramic fibres or consist of glass or a metal material different from the metal matrix of the reinforcing element.

6. Use according to one of the preceding claims, wherein the reinforcing element contains, in addition to a metal material forming the metal matrix, substantially only the reinforcement fibres embedded in the metal matrix.

7. Use according to one of Claims 2-5, wherein the reinforcing element is formed by a hybrid-yarn semifinished product which, in addition to the reinforcement fibres, has the metal-matrix forming fibres made of a metal material.

8. Method for producing chassis (1) of motor vehicles, wherein the motor vehicles are different in terms of their weight and/or drive power and wherein the chassis each comprise a part that absorbs or transmits forces which consists of a metal material and is identical in terms of its geometric dimensions, wherein a tape-like reinforcing element (5) consisting of a fibre-reinforced metal matrix is applied to the part of a chassis (1) by thermal joining in the broadest sense under contact pressure, and which reinforcing element (5) is either not applied at all or is applied in a smaller size in a different motor-vehicle type with a lower weight and/or lower drive power.

9. Method according to Claim 8, wherein the reinforcing element is applied by what is known as ultrasonic additive manufacturing.

## Revendications

1. Utilisation d'au moins un élément structurel en matériau métallique, absorbant ou transmettant des forces, dans des mécanismes de roulement de véhicules automobiles, au moins un élément de renforcement (5) en forme de bande, qui comprend une matrice métallique renforcée par des fibres, étant appliqué à la surface de l'élément structurel par assemblage thermique au sens le plus large, lesdits véhicules automobiles étant différents quant à leur poids et/ou leur puissance motrice et comprenant un même élément structurel, quant à ses dimensions géométriques, qui absorbe ou transmet des forces, dans un type de véhicule automobile de poids plus élevé et/ou de puissance motrice plus élevée, un élément de renforcement (5) étant appliqué sur au moins une portion de surface de cet élément structurel, laquelle forme un chemin de charge, ledit élément de renforcement (5) n'étant pas du tout prévu, ou étant prévu dans une dimension moindre, dans le cas d'un autre type d'un véhicule automobile de poids moindre et/ou de puissance motrice moindre.

2. Utilisation d'au moins un élément structurel selon la revendication 1, les mécanismes de roulement comprenant chacun un porte-essieu pourvu d'au moins deux poutrelles longitudinales (3) et d'au moins une poutrelle transversale (4) reliant les deux poutrelles longitudinales, la poutrelle longitudinale (3) et/ou la poutrelle transversale (4) ou un panneau de poussée (15) étant ou comportant un élément structurel métallique pourvu d'un élément de renforcement (5) appliqué par assemblage thermique.

3. Utilisation selon la revendication 2, les mécanismes de roulement comprenant chacun au moins un composant de liaison de roue destiné à relier de manière articulée une roue du véhicule au porte-essieu (2) et/ou à une carrosserie du véhicule, le composant de liaison de roue étant ou comportant un élément structurel métallique pourvu d'un élément de renforcement (5) appliqué par assemblage thermique.

4. Utilisation selon l'une des revendications précédentes, l'élément de renforcement (5) étant également relié par complémentarité de formes à l'élément structurel qui absorbe ou transmet des forces.

5. Utilisation selon l'une des revendications précédentes, les fibres de renforcement de l'élément de renforcement (5) étant des fibres de carbone ou des fibres céramiques ou étant en verre ou en un matériau métallique qui diffère de la matrice métallique de l'élément de renforcement.

6. Utilisation selon l'une des revendications précédentes, l'élément de renforcement ne contenant, en plus d'un matériau métallique formant la matrice métallique, sensiblement que les fibres de renforcement noyées dans la matrice métallique.

7. Utilisation selon l'une des revendications 2 à 5, l'élément de renforcement étant formé par un produit semi-fini en fil hybride qui, en plus des fibres de renforcement, comporte des fibres en matériau métallique qui forment la matrice métallique.

8. Procédé de fabrication de mécanismes (1) de véhicules automobiles, les véhicules automobiles étant différents en termes de poids et/ou de puissance motrice et les mécanismes de roulement comprenant chacun un même élément structurel en matériau métallique en termes de dimensions géométriques, lequel absorbe ou transmet des forces, un élément de renforcement (5) en forme de bande, comprenant une matrice métallique renforcée par des fibres, étant appliqué sur l'élément structurel d'un mécanismes de roulement (1) par assemblage thermique au sens le plus large sous pression de contact et ledit élément de renforcement (5) n'étant pas du tout prévu, ou étant prévu dans une dimension moindre, dans le cas d'un autre type d'un véhicule automobile de poids moindre et/ou de puissance motrice moindre.

9. Procédé selon la revendication 8, l'élément de renforcement étant appliqué par ce que l'on appelle la fabrication additive à ultrasons.
